# EUROPEAN PATENT SPECIFICATION

(11) **EP 1 702 901 B1**
(45) Date of publication and mention of the grant of the patent: **07.05.2014**
(21) Application number: 06251401.3
(22) Date of filing: 16.03.2006
(51) Int. Cl.: C04B 35/195, C04B 35/622, C04B 38/00, C04B 103/54, C04B 40/00

(54) **Method of manufacturing ceramic formed structure**
Verfahren zur Herstellung von keramischen Formkörpern
Procédé de fabrication de corps céramiques formés

(30) Priority: 17.03.2005 JP 2005077345
(43) Date of publication of application: 20.09.2006
(73) Proprietor: NGK Insulators, Ltd., Nagoya-city, Aichi 467-8530 (JP)
(72) Inventor: Shirai,M., NGK Insulators,Ltd/Legal Affairs&IP Dep, Nagoya City Aichi-ken 467-8530 (JP); Makino, K, NGK Insula. Ltd/Legal Affairs &IP Dep, Nagoya City, Aichi-ken,467-8530 (JP)
(74) Representative: Paget, Hugh Charles Edward

(56) References cited:
- EP-A- 1 710 062
- US-A- 4 292 359
- US-A1- 2006 205 846

## Description

### BACKGROUND OF THE INVENTION

### Field of the Invention

The present invention relates to a method of manufacturing a ceramic formed structure including a formed structure containing a ceramic as a main material, and having a honeycomb shape or various cell structures; and a colored ceramic formed structure obtained by the method.

### Description of the Related Art

As a carrier for a catalyst for use in an exhaust gas purifying device of an internal combustion engine or a chemical reaction device utilizing a catalyst function, a ceramic carrier for a catalyst is used. This ceramic carrier for the catalyst is a honeycomb-shaped ceramic structure (honeycomb structure) mainly made of a ceramic material wherein, for example, a large number of cells is formed being defined by partition walls.

The ceramic carrier for the catalyst (honeycomb carrier for the catalyst) can be prepared using, for example, forming materials including a ceramic material, a binder, and water. After mixing the forming materials, the materials are extruded into, for example, a honeycomb shape, and dried to obtain a honeycomb-shaped ceramic formed structure, and the structure is fired.

In such ceramic carrier for the catalyst, conditions for carrying catalyst components can change with a porosity of a ceramic structure for use as a substrate therefor. Thus, it is necessary to manage components, blend and the like of the forming materials of the ceramic formed structure, which influence the porosity of the ceramic structure, lot by lot basis with relation with to the step of carrying the catalyst components on the ceramic structure during its manufacturing.

However, since the ceramic material as a main component of the forming material is a monochromatic material, an extruded ceramic formed structure ceramic formed structure becomes monochromatic, and it is difficult to distinguish the extruded ceramic formed structure at a glance. Therefore, there are circumstances in which it is difficult to manage the ceramic formed structure based on every lot of the forming material used for its manufacturing. Needless to say, during the management of the ceramic formed structure, not only the lot of the forming material but also data such as a weight and a dimension are sometimes included in a management object, and there is a case where the ceramic formed structure is managed by indicating the information in characters, barcodes or the like on an outer face of the structure. However, such indication of the information is inferior in grasping properties at a glance with naked eye. Moreover, this type of the indication is effective only when the information is clarified. On the other hand, in many cases, the extrusion forming is continuously performed. Therefore, when the lot of the forming materials is changed, this type indication of the information can not be used as means for judging the change of lots with respect to the ceramic formed structure obtained by the extrusion forming. It seems that there is not any prior document relating to the information management of the ceramic formed structure and the ceramic carrier for the catalyst, but in another field, for example, Japanese Utility Model Application Laid-Open No. 6-14019 is exemplified as the prior art document relating to prevention of a product from being wrongly recognized, and improvement of circulation management.

EP 1 048 425 describes a process for forming tiles of porcellainized ceramic stone by extrusion, comprising the following operations:
preparing at least two pastes, typologically defined as porcellainized ceramic stone, having different colours;
feeding said at least two pastes into a mixing device and/or injecting them directly into the extruder chamber;
subjecting the mixed material to the action of a screw extruder;
subjecting the mass advancing within the extruder, downstream of the screw and upstream of the die braking system, to the action of at least one flow deviator means;
from the extruded web obtained in this manner, separating portions corresponding to the formed objects.

### SUMMARY OF THE INVENTION

The present invention has been developed in view of the above-described conventional problems, and an object is to provide means for managing a ceramic formed structure in a manufacturing process thereof so as to easily distinguish the ceramic formed structure based on every lot of a forming material even in a case where extrusion forming is continuously performed.

As a result of intensive investigations by the present inventors to achieve the above-described object, it has been found that the above object can be achieved by coloring the ceramic formed structure, preferably by using a different colorant lot by lot basis, and the present invention is completed.

That is, in the present invention, there is provided a method of manufacturing a ceramic formed structure, comprising the steps of: mixing forming materials including at least a ceramic material, a binder, and water to obtain a blend for forming; kneading the blend; extruding the blend; and drying an extruded ceramic formed structure, wherein in the kneading step, at least one colorant is added to the blend for forming to obtain a colored ceramic formed structure.

In the method of manufacturing the ceramic formed structure in the present invention, an amount of the colorant to be added is preferably 0.001% or more and 1% or less in terms of a mass ratio with respect to an amount of the ceramic material contained in the blend for forming. Moreover, the amount of the colorant to be added is more preferably 0.003% or more and 0.02% or less in terms of the mass ratio with respect to the amount of the ceramic material contained in the blend for forming. In this specification, the term "color" means any color capable of being identified with naked eye, and the term "colorant" means any coloring agent capable of coloring a ceramic formed structure to the intended color, and includes both single substance and a mixture of two or more substances as far as it can act as a coloring agent for a ceramic formed structure.

Furthermore, it is preferable to change a color developed by the colorant in a batch treatment before or after a specified batch treatment, in a case where the mixing is performed as the batch treatment. Furthermore, the color developed by the colorant is preferably changed every lot of the forming material, every shift, or every product number.

There is not any restriction on the color developed by single colorant or a mixture of two or more of colorants, as long as the color is clearly developed with respect to the color of the ceramic material itself, but the color is preferably chosen among colors selected from the group consisting of white, yellow, green, blue, red, purple and an intermediate color between them.

In the method of manufacturing the ceramic formed structure of the present invention, the colorant may be a pigment or a dyestuff, and is not limited. As the dyestuff, an azo dyestuff, a cationic azamethine-based dyestuff, a thiazine-based dyestuff, a triphenylmethane-based dyestuff or the like is usable. The colorant may have a property that the color disappears at a time when the ceramic formed structure is fired at a high temperature in order to obtain the ceramic structure, or a property that the color may remain in the fired ceramic structure even after its firing. Furthermore, 95% by mass or more of the colorant may preferably comprise combustible components.

The method of manufacturing the ceramic formed structure of the present invention is preferably used in a case where the ceramic formed structure as a manufacturing object is a honeycomb formed structure having a honeycomb shape.

In the method of manufacturing the ceramic formed structure in the present invention, the ceramic material is preferably a cordierite forming material. The cordierite forming material means a substance being converted into cordierite when fired. As an example of the cordierite forming material, is illustratively given a mixture of talc, kaolin, alumina, aluminum hydroxide, silica and the like whose composition after firing is converted into a theoretical composition of cordierite, 2MgO•2Al₂O₃•5SiO₂. There is not any restriction on the ceramic material, and the material may comprise one or more of compounds selected from the group consisting of alumina, mullite, lithium aluminum silicate, aluminum titanate, titania, zirconia, silicon nitride, aluminum nitride, and silicon carbide.

Moreover, according to the present invention, there is provided a method of manufacturing a ceramic carrier for a catalyst, in which a colored ceramic formed structure is obtained by any of the above methods of manufacturing the ceramic formed structure, and the ceramic formed structure is fired to obtain a ceramic structure. Furthermore, according to the present invention, there is provided a method of choosing a ceramic carrier for a catalyst produced lot by lot basis, which comprises the steps of: mixing forming materials including at least a ceramic material, a binder, and water to obtain a blend for forming; kneading the blend; extruding the blend; and drying an extruded ceramic formed structure, and adding at least one colorant to the blend to obtain a colored ceramic formed structure having an intended color, wherein a ceramic carrier for a catalyst produced is chosen based on an intended color.

Furthermore, according to the present invention, there is provided a colored ceramic formed structure obtained by any of the above methods of manufacturing the ceramic formed structure.

According to the method of manufacturing the ceramic formed structure in the present invention, there is obtained the ceramic formed structure which is colored into an intended color by adding at least one colorant to the blend for forming during the kneading. Since the ceramic formed structure is colored, it is easy to distinguish the structure, for example, lot by lot basis by its appearance at a glance.

Even in the case that the extrusion step after the kneading step is continuously performed, it is possible to easily distinguish and manage the ceramic formed structure based on every lot of the forming material by changing a color developed by a colorant added lot by lot basis at the time when components, blend and the like of the forming material are changed. Thereby, the traceability of the ceramic formed structure can be easily clarified by the relation between the ceramic formed structure and the components, blend and the like of the forming material. In a case where a conventional white forming material (blend for forming) is continuously extruded, it has been difficult to judge a portion of the ceramic formed structure from which the forming material is changed. However, according to the present invention, this judgment is easily and surely performed. Since the ceramic formed structure manufactured from a mixture of the forming materials came from different lots each other can be securely removed from an outgoing product, the occurrence of a problem that the ceramic formed structures having different components, blends and the like of the forming material are mixed up each other can be prevented easily.

Moreover, in a case where the mixing prior to the kneading step is performed as a batch treatment, a color developed by a colorant is changed by batch to batch basis after or before a certain batch treatment. Accordingly, it is possible to easily clarify traceability of the ceramic formed structure based on the relation between the kneading step and the mixing step in that case.

Furthermore, the color developed by the colorant may be changed for each product number of the product of the ceramic formed structure having different sizes (diameter, length) and the like of the ceramic formed structure. Accordingly, it is possible to classify the product number by changing the color to be used. Additionally, this method may be effectively adopted for the trial production using test substrate through the actual production line. This is because a trial sample structure can be easily distinguished from the structure produced as the actual production by using different colors each other, thereby the confusion between the trail sample and the actual production can be surely prevented.

In a preferable mode of the method of manufacturing the ceramic formed structure according to the present invention, the amount of a colorant to be added is 0.001% or more and 1% or less in terms of the mass ratio with respect to the amount of the ceramic material contained in the blend for forming. In a more preferable mode, the amount of the colorant to be added is 0.003% or more and 0.02% or less in terms of the mass ratio with respect to the amount of the ceramic material contained in the blend for forming. Therefore, it is possible to secure sufficient color development, and characteristics of an extruded ceramic formed structure fired ceramic structure are little influenced. When the amount of the colorant is less than 0.001%, there are possibilities that the color is not sufficiently developed and that the structures are not easily distinguished by the colors. However, such problem does not occur according to the preferable mode of the ceramic formed structure of the present invention. A large amount of colorant may be used as long as the characteristics of the honeycomb structure produced are not adversely affected, but an upper limit of the amount would be 1% in consideration of costs and the like.

In the method of manufacturing the ceramic carrier for the catalyst in the present invention, the colored ceramic formed structure obtained by the method of manufacturing the ceramic formed structure according to the present invention is fired to obtain the ceramic structure. Therefore, in a case where the colorant is used whose color remains in the structure even if the ceramic formed structure is fired at a high temperature, it is easy to apparently distinguish the ceramic carrier for the catalyst by the remaining color at a glance. There are obtained effects which conform to those of the above method of manufacturing the ceramic formed structure. It is also easy to distinguish the carrier by image processing using a CCD camera and a computer in addition to the naked eye inspection.

On the other hand, in a case where there is used a colorant having a property that a color disappears at a time when the ceramic formed structure is fired at a high temperature according to the method of manufacturing the ceramic carrier for the catalyst in the present invention, the color of the colorant disappears from the fired ceramic carrier for the catalyst, and the carrier has a color inherent in the used ceramic material. However, the colored ceramic formed structure can be securely sorted out and managed before fired, and the firing can be performed, for example, based on lot by lot of the forming materials used. Therefore, the confusion among ceramic carriers for the catalyst having different component, blend and the like of the forming materials hardly occurs.

### BRIEF DESCRIPTION OF THE DRAWINGS

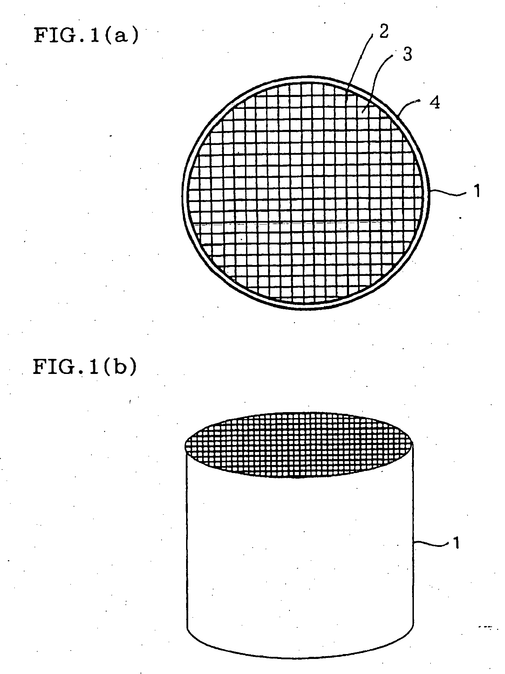

FIGS. 1 (a) and (b) are a diagram showing an embodiment of a colored ceramic formed structure in the present invention, FIG. 1(a) is a plan view showing an end face of the structure, and FIG. 1(b) is a perspective view of the structure.

### DESCRIPTION OF THE PREFERRED EMBODIMENT

An embodiment of the present invention will be described hereinafter with reference to the drawings, but the present invention is not limited to this embodiment, and can be variously altered, modified, and improved based on knowledge of a person skilled in the art without departing from the scope of the present invention. To carry out or verify the present invention, means similar or equivalent to means described in the present specification are applicable, but preferable means will be described hereinafter.

FIG. 1(a) and 1(b) are diagrams showing an embodiment of a colored ceramic formed structure, FIG. 1(a) is a plan view showing an end face of the structure, and FIG. 1(b) is a perspective view of the structure. A shown colored ceramic formed structure 1 is formed so that a large number of cells 3 are defined by partition walls 2. The structure is a honeycomb-shaped formed structure (honeycomb formed structure) having an outer wall 4 which forms an outer-diameter contour in a periphery. When a colorant is added to a blend for forming, and sufficiently kneaded, the colored ceramic formed structure 1 is homogeneously colored, and the whole partition walls 2 and outer wall 4 are colored. In the present invention, to manufacture such colored ceramic formed structure, a method of manufacturing the ceramic formed structure includes: a mixing step; and a kneading step. The method preferably has a clay kneading step of forming a clay obtained in the kneading step into a predetermined shape. Moreover, through a forming step of forming the clay into a predetermined shape (e.g., a honeycomb shape), the colored ceramic formed structure is obtained.

First, in the mixing step, the forming materials including at least the ceramic material, the binder, and water are mixed to obtain the blend for forming. In addition, a dispersant, a pore forming agent or the like may be added. The ceramic material is a particle material constituting a main constituting component of a ceramic structure (fired structure), and examples of the material include a cordierite forming material, mullite, alumina, aluminum titanate, and a mixture of them. The binder is an additive which imparts fluidity to the clay during the extrusion forming and which performs a function of a reinforcing agent to maintain a mechanical strength of a non-fired ceramic formed structure. For example, hydroxypropyl methyl cellulose, methyl cellulose or the like is preferably usable. The pore forming agent is an additive for forming pores during firing due to its burning out with hardly remaining the residue after burning out. Accordingly, porosity is increased, and a high-porosity ceramic structure is obtained. Examples of the pore forming agent include graphite, coke, foamed resin, flour, and starch. The dispersant is an additive for promoting dispersion of the ceramic material into water to obtain a homogeneous blend for forming, and, for example, fatty acid soap, polyalcohol and the like are preferably usable.

In the method of manufacturing the ceramic formed structure in the present invention, there is not any restriction on specific mixing means. As a mixer which realizes the mixing, for example, a screw type mixer, a kneader type mixer, a ploughshare (stirring blade) mixer or the like is usable. In this case, the colorant may be added.

Next, in the kneading step, the blend for forming obtained in the mixing step is kneaded to obtain the clay. In this case, the colorant is added.

The kneading can be performed by, for example, a Sigma kneader, Bunbury mixer, screw type extruding kneader or the like. As the colorant to be added, there is usable Aizen Cation Golden Yellow GLH 200%, Aizen Diamond Green GH, Aizen Methylene Blue FZ, Aizen Methyl Violet Pure Special (they are manufactured by Hodogaya Kagaku Kogyo Kabushiki Kaisha), Safranine GK Conk (manufactured by Nippon Kagaku Seisakusho Kabushiki Kaisha) or the like. An amount of the colorant to be added is preferably 0.001% or more and 1% or less, more preferably 0.003% or more and 0.02% or less in terms of a mass ratio with respect to an amount of the ceramic material contained in the blend for forming.

Next, in the forming step, the clay to which the colorant has been added is formed into a predetermined shape (e.g., honeycomb shape having a large number of cells being defined by partition walls), and the clay is further dried to obtain the colored ceramic formed structure. It is to be noted that the colored ceramic formed structure is not limited to the honeycomb shape of the colored ceramic formed structure 1 shown in FIGS. 1(a) and 1(b). For example, the whole shape may be a square pole shape, a triangular prism shape or the like in addition to a cylindrical shape. A shape of each cell (shape of a section perpendicular to a direction in which the cells are formed) may be hexagonal, triangular or the like in addition to a quadrangular shape. Alternatively, the structure may have a monolith structure.

During the extrusion forming, the clay is preferably extruded using a die including a slit having a shape which is complementary to that of the partition wall in a case where the ceramic formed structure especially having a honeycomb shape is obtained. The colored ceramic formed structure (honeycomb formed structure) having a desired cell shape, partition wall thickness, and cell density can be easily obtained by such method. There is not any special restriction on a device which performs the extrusion forming. For example, a ram type extrusion molder or a biaxial continuous molder is usable. It is to be noted that the kneading step and the forming step are preferably integrally and continuously performed. Examples of the kneading molder which realizes the forming the colored ceramic formed structure include a biaxial continuous kneading extrusion molder.

It is to be noted that it is preferable to mark a position of a predetermined portion of an extruded ceramic formed structure ceramic formed structure during the extrusion forming. This is because an extruding or drying direction of the ceramic formed structure can be managed. This marking can be performed by printing a line or a plurality of lines in a clear color on the ceramic formed structure immediately after the extrusion forming, irrespective of adding the colorant to the clay.

In the method of manufacturing the ceramic carrier for the catalyst in the present invention, the colored ceramic formed structure is obtained by the above method of manufacturing the ceramic formed structure, and firing the colored ceramic formed structure to obtain the ceramic structure. In a case where the colorant having a property that the color does not disappear after the firing is used, it is possible to obtain the colored ceramic carrier for the catalyst.

### [Examples]

(Example 1) As a main material, there was used a cordierite forming material (first lot of forming material) made of talc, kaolin, alumina, and silica. A binder and a colorant were added to the material, and mixed. Furthermore, lauric potash soap and water were added, and mixed, and a blend for forming was obtained. As the colorant, there was used Aizen Methylene Blue FZ (manufactured by Hodogaya Kagaku Kogyo Kabushiki Kaisha), and 0.015% by mass of the colorant was used with respect to the cordierite forming material. It is to be noted that the binder was added so as to obtain a content of 6.0% by mass, and lauric potash soap was added so as to obtain a content of 0.3% by mass. Thereafter, an extruded ceramic formed structure blend for forming was charged into a kneading extrusion molder for continuously kneading the blend while deaerating the blend. The extruded formed structure was dried with a dielectric drier or a hot-air drier, and a honeycomb formed structure was manufactured as a ceramic formed structure. The manufactured honeycomb formed structure was light blue.

Subsequently to the use of the first lot of forming material, as a main material, there was used a cordierite forming material (second lot of forming material) made of talc, kaolin, alumina, silica, and aluminum hydroxide. In the same manner as in the first lot, a binder and a colorant were added to the material, and mixed. Furthermore, lauric potash soap and water were added, and mixed, and a blend for forming was obtained. There was used Safranine GK Conk (manufactured by Nippon Kagaku Seisakusho Kabushiki Kaisha), and 0.015% by mass of the colorant was used with respect to the cordierite forming material. It is to be noted that the binder was added so as to obtain a content of 6.0% by mass, and lauric potash soap was added so as to obtain a content of 0.3% by mass. Thereafter, a honeycomb formed structure was manufactured in the same manner as described above. The manufactured honeycomb formed structure had a peach color.

From the observation of the forming step with the kneading extrusion molder, the spiral inclusion of peach color clay from the center of the section of the structure extruded attributed to the start of a partial use of the second lot of forming material into the section having a light blue colored circular portion was observed at the end of the use of the first lot of forming material. A peach color region gradually increased, and the section finally changed into a peach color circular section. The light-blue honeycomb formed structure, the peach color honeycomb formed structure, and the honeycomb formed structure having a mixed color of light blue and peach colors were sampled, respectively, and X-ray diffraction measurement was performed. Then, the presence of peaks of talc, kaolin, alumina, and silica could be confirmed in the light-blue colored honeycomb formed structure. Moreover, the presence of peaks of talc, kaolin, alumina, silica, and aluminum hydroxide could be confirmed in the peach colored honeycomb formed structure. However, in the honeycomb formed structure having the mixed color of light blue and peach colors, the presence of the peak of aluminum hydroxide was confirmed in a certain portion, but not in another portion. In this case, products produced at the switching period from the first lot to the second lot of forming material needs to be removed from a product. A mixed portion of two kinds of cordierite forming materials having different components was seen from the appearance at a glance.

(Example 2) As a main material, there was used a cordierite forming material (first lot of forming material) made of talc, kaolin, alumina, and silica. A binder and a colorant were added to the material, and mixed. Furthermore, lauric potash soap and water were added, and mixed, and a blend for forming was obtained. As the colorant, there was used Aizen Methylene Blue FZ (manufactured by Hodogaya Kagaku Kogyo Kabushiki Kaisha), and 0.015% by mass of the colorant was used with respect to the cordierite forming material. It is to be noted that the binder was added so as to obtain a content of 6.0% by mass, and lauric potash soap was added so as to obtain a content of 0.3% by mass. Thereafter, a honeycomb formed structure was manufactured in the same manner as in Example 1. The manufactured honeycomb formed structure was light blue.

Subsequently to the use of the first lot of forming material, as a main material, there was used a cordierite forming material (second lot of forming material) made of talc, kaolin, alumina, silica, and aluminum hydroxide. In the same manner as in the first lot, a binder was added, and mixed. Furthermore, lauric potash soap and water were added, and mixed, and a blend for forming was obtained. Any colorant was not used. It is to be noted that the binder was added so as to obtain a content of 6.0% by mass, and lauric potash soap was added so as to obtain a content of 0.3% by mass. Thereafter, a honeycomb formed structure was manufactured in the same manner as in Example 1. The manufactured honeycomb formed structure was white.

From the observation of the forming step with the kneading extrusion molder, the spiral inclusion of white clay from the center of the section of the structure extruded attributed to the start of a partial use of the second lot of forming material into the section having a light blue colored circular portion was observed at the end of the use of the first lot of forming material. A white region gradually increased, and the section finally changed into a white circular section. The light-blue honeycomb formed structure, the white honeycomb formed structure, and the honeycomb formed structure having a mixed color of light blue and white colors were sampled, respectively, and X-ray diffraction measurement was performed. Then, the presence of the peaks of talc, kaolin, alumina, and silica could be confirmed in the light-blue honeycomb formed structure. Moreover, the presence of the peaks of talc, kaolin, alumina, silica, and aluminum hydroxide could be confirmed in the white honeycomb formed structure. However, in the honeycomb formed structure having the mixed color of light blue and white colors, the presence of the peak of aluminum hydroxide was confirmed in a certain portion, but not in another portion. In this case, products produced at the switching period from the first lot to the second lot of forming material needs to be removed from a product. A mixed portion of two kinds of cordierite forming materials having different components was seen from the appearance at a glance.

(Comparative Example 1) As a main material, there was used a cordierite forming material (first lot of forming material) made of talc, kaolin, alumina, and silica. A binder was added to the material, and mixed. Furthermore, lauric potash soap and water were added, and mixed, and a blend for forming was obtained. Any colorant was not used. It is to be noted that the binder was added so as to obtain a content of 6.0% by mass, and lauric potash soap was added so as to obtain a content of 0.3% by mass. Thereafter, a honeycomb formed structure was manufactured in the same manner as in Example 1. The manufactured honeycomb formed structure was white.

Subsequently to the use of the first lot of forming material, as a main material, there was used a cordierite forming material (second lot of forming material) made of talc, kaolin, alumina, silica, and aluminum hydroxide. In the same manner as in the first lot, a binder was added, and mixed. Furthermore, lauric potash soap and water were added, and mixed, and a blend for forming was obtained. Any colorant was not used. It is to be noted that the binder was added so as to obtain a content of 6.0% by mass, and lauric potash soap was added so as to obtain a content of 0.3% by mass. Thereafter, a honeycomb formed structure was manufactured in the same manner as in Example 1. The manufactured honeycomb formed structure was white.

When a forming step with the kneading extrusion molder was observed, a white section continued through the first and second lots of forming material. A portion in which the forming material was changed was not clear. It is necessary to remove products produced at the switching period from the first lot to the second lot of forming material from a product, but it was difficult to judge which portion should be removed.

As described above, it can be confirmed that a traceability of the ceramic formed structure (honeycomb formed structure) is clarified based on a relation with respect to the forming material, when the structure is colored.

A method of manufacturing a ceramic formed structure in the present invention is preferably used in manufacturing a ceramic carrier for a catalyst. The method is preferably usable in manufacturing a ceramic filter which is preferable as a filter for water treatment which is useful for an environmental measure such as prevention of pollution, a dust collecting filter for use in an application such as recovery of a product from a high-temperature gas, or a diesel particulate filter which captures particulates discharged from a diesel engine.

## Claims

1. A method of manufacturing a ceramic formed structure, comprising the steps of:
mixing forming materials including at least a ceramic material, a binder, and water to obtain a blend for forming;
kneading the blend;
extruding the blend; and
drying an extruded ceramic formed structure,
wherein in the kneading step, at least one colorant is added to a blend for forming to obtain a colored ceramic formed structure.

2. The method of manufacturing the ceramic formed structure according to claim 1, wherein an amount of the colorant to be added is 0.001% or more and 1% or less in terms of a mass ratio with respect to an amount of the ceramic material contained in the blend for forming.

3. The method of manufacturing the ceramic formed structure according to claim 2, wherein the amount of the colorant to be added is 0.003% or more and 0.02% or less in terms of the mass ratio with respect to the amount of the ceramic material contained in the blend for forming.

4. The method of manufacturing the ceramic formed structure according to any one of claims 1 to 3, wherein a color developed by the colorant is changed before or after a specified batch treatment in a case where the mixing is performed as the batch treatment.

5. The method of manufacturing the ceramic formed structure according to any one of claims 1 to 4, wherein the color developed by the colorant is changed every lot of the forming material, every shift, or every product number.

6. The method of manufacturing the ceramic formed structure according to any one of claims 1 to 5, wherein the color developed by the colorant is a color selected from the group consisting of white, yellow, green, blue, red, purple, and an intermediate color between them.

7. The method of manufacturing the ceramic formed structure according to any one of claims 1 to 6, wherein 95% by mass or more of the colorant comprises combustible components.

8. The method of manufacturing the ceramic formed structure according to any one of claims 1 to 7, wherein the ceramic formed structure is a honeycomb formed structure having a honeycomb shape.

9. The method of manufacturing the ceramic formed structure according to any one of claims 1 to 8, wherein the ceramic material is a cordierite forming material.

## Patentansprüche

1. Verfahren zur Herstellung einer Keramikformstruktur, das die folgenden Schritte umfasst:
das Mischen von Materialien zum Formen, umfassend zumindest ein Keramikmaterial, ein Bindemittel und Wasser, um eine Mischung zum Formen zu erhalten;
das Kneten der Mischung;
das Extrudieren der Mischung; und
das Trocknen der extrudierten Keramikformstruktur,
worin im Schritt des Knetens zumindest ein Färbemittel zu der Mischung zum Formen zugesetzt wird, um eine gefärbte Keramikformstruktur zu erhalten.

2. Verfahren zur Herstellung einer Keramikformstruktur nach Anspruch 1, worin die zuzusetzende Menge des Färbemittels 0,001 % oder mehr bzw. 1 % oder weniger eines Masseverhältnisses, bezogen auf die in der Mischung zum Formen enthaltene Menge des Keramikmaterials, beträgt.

3. Verfahren zur Herstellung einer Keramikformstruktur nach Anspruch 2, worin die zuzusetzende Menge des Färbemittels 0,003 % oder mehr bzw. 0,02 % oder weniger eines Masseverhältnisses, bezogen auf die in der Mischung zum Formen enthaltene Menge des Keramikmaterials, beträgt.

4. Verfahren zur Herstellung einer Keramikformstruktur nach einem der Ansprüche 1 bis 3, worin die durch das Färbemittel entwickelte Farbe vor oder nach einer definierten Chargenbehandlung in einem Fall, bei dem das Mischen als Chargenbehandlung vorgenommen wird, geändert wird.

5. Verfahren zur Herstellung einer Keramikformstruktur nach einem der Ansprüche 1 bis 4, worin die durch das Färbemittel entwickelte Farbe an jeder Charge des Materials zum Formen, jeder Schicht oder jeder Produktzahl geändert wird.

6. Verfahren zur Herstellung einer Keramikformstruktur nach einem der Ansprüche 1 bis 5, worin die durch das Färbemittel entwickelte Farbe eine aus der aus Weiß, Gelb, Grün, Blau, Rot, Violett und einer Zwischenfarbe zwischen diesen bestehenden Gruppe ausgewählte Farbe ist.

7. Verfahren zur Herstellung einer Keramikformstruktur nach einem der Ansprüche 1 bis 6, worin 95 Massen-% oder mehr des Färbemittels brennbare Komponenten umfassen.

8. Verfahren zur Herstellung einer Keramikformstruktur nach einem der Ansprüche 1 bis 7, worin die Keramikformstruktur eine Wabenstruktur mit Wabenform ist.

9. Verfahren zur Herstellung einer Keramikformstruktur nach einem der Ansprüche 1 bis 8, worin das Keramikmaterial ein Cordierit bildendes Material ist.

## Revendications

1. Procédé pour fabriquer une structure façonnée en céramique, comprenant les étapes consistant à :
mélanger des matériaux de façonnage comprenant au moins un matériau céramique, un liant, et de l'eau, pour obtenir un mélange pour façonnage ;
malaxer le mélange ;
extruder le mélange ; et
sécher une structure façonnée en céramique extrudée,
dans lequel, dans l'étape de malaxage, au moins un colorant est ajouté à un mélange pour façonnage afin que soit obtenue une structure façonnée en céramique colorée.

2. Procédé pour fabriquer une structure façonnée en céramique selon la revendication 1, dans lequel la quantité de colorant à ajouter est de 0,001 % ou plus et de 1 % ou moins en termes de proportion en masse par rapport à la quantité du matériau céramique contenu dans le mélange pour façonnage.

3. Procédé pour fabriquer une structure façonnée en céramique selon la revendication 2, dans lequel la quantité de colorant à ajouter est de 0,003 % ou plus et de 0,02 % ou moins en termes de proportion en masse par rapport à la quantité du matériau céramique contenu dans le mélange pour façonnage.

4. Procédé pour fabriquer une structure façonnée en céramique selon l'une quelconque des revendications 1 à 3, dans lequel la couleur développée par le colorant change avant ou après un traitement par lots spécifié dans le cas où le mélange est effectué sous la forme d'un traitement par lots.

5. Procédé pour fabriquer une structure façonnée en céramique selon l'une quelconque des revendications 1 à 4, dans lequel la couleur développée par le colorant change pour chaque lot du matériau de façonnage, chaque équipe, ou chaque numéro de produit.

6. Procédé pour fabriquer une structure façonnée en céramique selon l'une quelconque des revendications 1 à 5, dans lequel la couleur développée par le colorant est une couleur choisie dans le groupe constitué par le blanc, le jaune, le vert, le bleu, le rouge, le pourpre, et une couleur intermédiaire entre ces couleurs.

7. Procédé pour fabriquer une structure façonnée en céramique selon l'une quelconque des revendications 1 à 6, dans lequel 95 % en masse ou plus du colorant comprennent des composants combustibles.

8. Procédé pour fabriquer une structure façonnée en céramique selon l'une quelconque des revendications 1 à 7, dans lequel la structure façonnée en céramique est une structure façonnée en nid d'abeilles ayant une forme de nid d'abeilles.

9. Procédé pour fabriquer une structure façonnée en céramique selon l'une quelconque des revendications 1 à 8, dans lequel le matériau céramique est un matériau de façonnage en cordiérite.
